# EUROPEAN PATENT SPECIFICATION

(11) **EP 4 357 641 B1**
(45) Date of publication and mention of the grant of the patent: **04.11.2026**
(21) Application number: 23186323.4
(22) Date of filing: 19.07.2023
(51) Int. Cl.: F16H 25/22, F16H 25/24

(54) **BALL NUT ASSEMBLY WITH AXIALLY MOUNTED END DEFLECTOR**
KUGELMUTTERANORDNUNG MIT AXIAL MONTIERTEM DEFLEKTOR;
ENSEMBLE ÉCROU À BILLES AVEC DÉFLECTEUR D'EXTRÉMITÉ MONTÉ AXIALEMENT

(30) Priority: 18.10.2022 CN 202222742378 U
(43) Date of publication of application: 24.04.2024
(73) Proprietor: Lee, Chuan-Yu, New Taipei City 235603 (TW)
(72) Inventor: Lee, Chuan-Yu, New Taipei City 235603 (TW)
(74) Representative: Viering, Jentschura & Partner mbB Patent- und Rechtsanwälte

(56) References cited:
- CN-U- 214 499 938
- DE-T5- 112017 007 853
- US-A1- 2010 180 707
- US-A1- 2014 013 887
- US-A1- 2019 195 325

## Description

### BACKGROUND

### Technical Field

The instant invention relates to a ball nut assembly.

### Related Art

Generally, in order to assemble a ball circulator, a groove will be provided on a nut. However, such an open groove will result in a low rigidity of the nut and is susceptible to noise. Further, in order to cooperate with the groove, a flange surface cannot be designed to be flush with a surface of the nut. As a result, when the ball circulator is impacted, the ball circulator may be damaged more easily. In addition, if a length of a guide portion of the ball circulator is longer, issue of clogging of balls might occur easily, resulting that the balls cannot roll smoothly. Some designs are known from CN214499938U, US2014013887A1, US2019195325A1, US2010180707A1 and DE112017007853T5.

### SUMMARY

According to the present invention, a ball nut assembly according to claim 1 is provided. Preferred embodiments are further defined in the dependent claims.

As above, according to one or some embodiments of the instant invention, a ball nut assembly is provided. By arranging the assembling groove wall on the assembling groove to increase the thickness of the nut body, the strength and service life of the nut body are improved, and the impact of noise on the ball nut assembly is also reduced. Further, in some embodiments, the flange radially extends from the end portion of the nut body. In this way, the surface of the flange is flushed with the end surface of the nut body, so that an assembling plane having a maximized surface area can be maintained during the assembling process. In addition, by shortening a guide length of the end component, the issues of balls clogging can be avoided.

### BRIEF DESCRIPTION OF THE DRAWINGS

The invention will become more fully understood from the detailed description given herein below for illustration only, and thus not limitative of the invention, wherein:
Fig. 1 illustrates a perspective view of a ball nut assembly according to an embodiment of the instant invention;
Fig. 2 illustrates a perspective view of a ball nut assembly according to an embodiment of the instant invention from another perspective;
Fig. 3 illustrates an exploded view of a ball nut assembly according to an embodiment of the instant invention;
Fig. 4 illustrates a perspective view of an end component according to an embodiment of the instant invention;
Fig. 5 illustrates a partial cross-sectional view of a ball nut assembly according to an embodiment of the instant invention;
Fig. 6 illustrates a front view of an end component according to an embodiment of the instant invention; and
Fig. 7 illustrates a schematic view of a nut body, an end component, and a shaft according to an embodiment of the instant invention.

### DETAILED DESCRIPTION

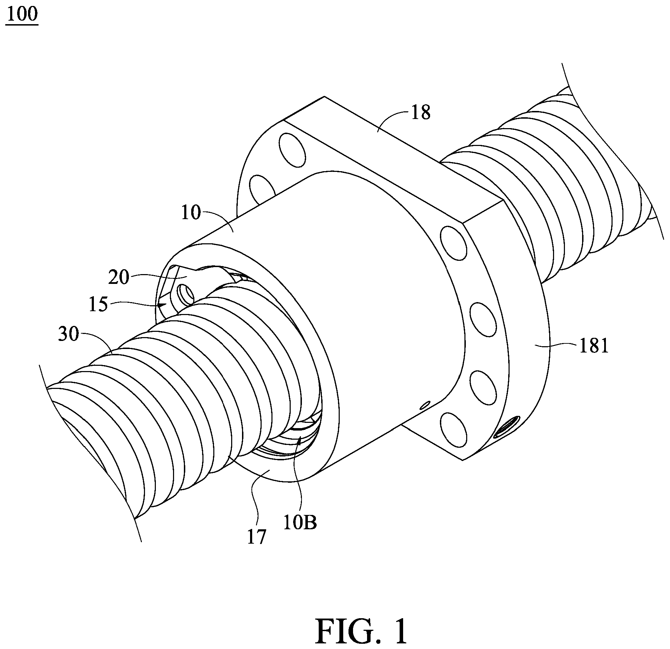

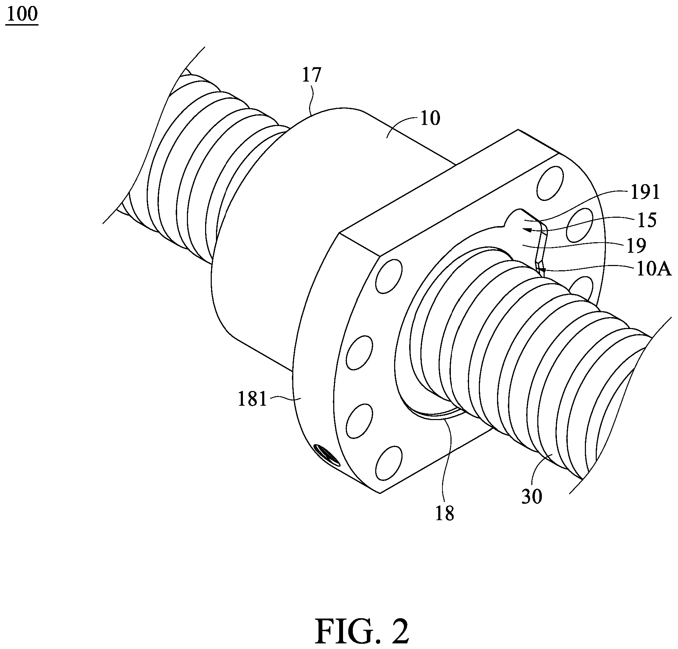

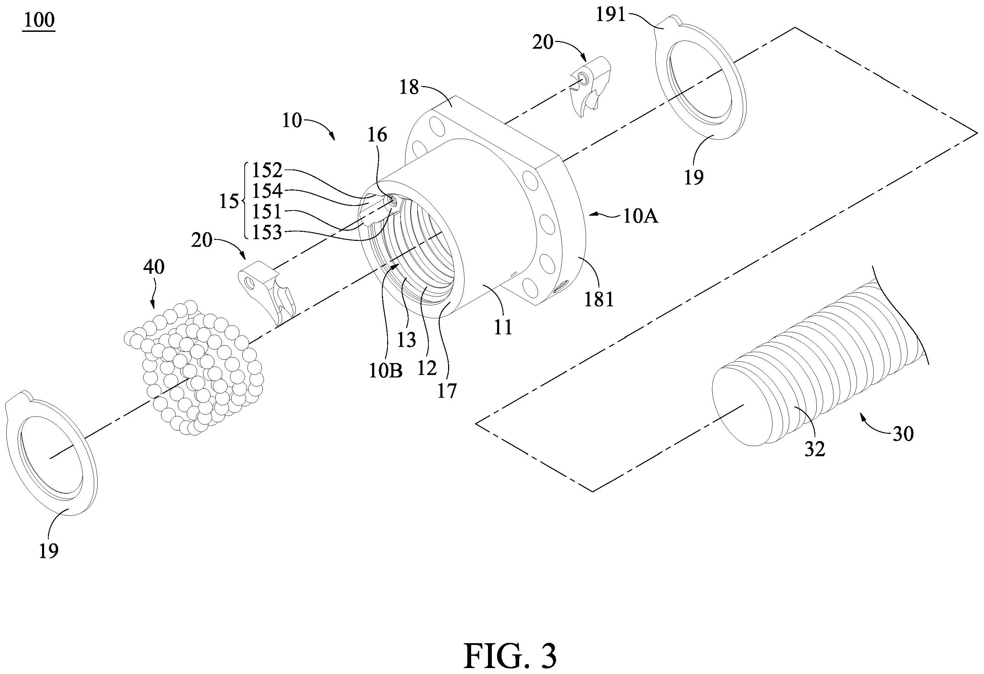

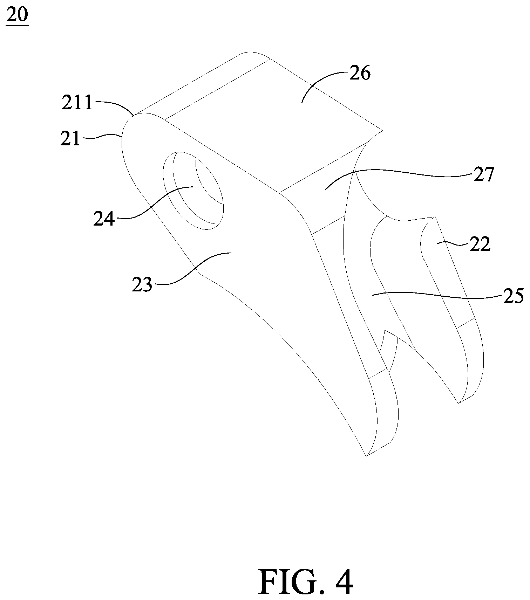

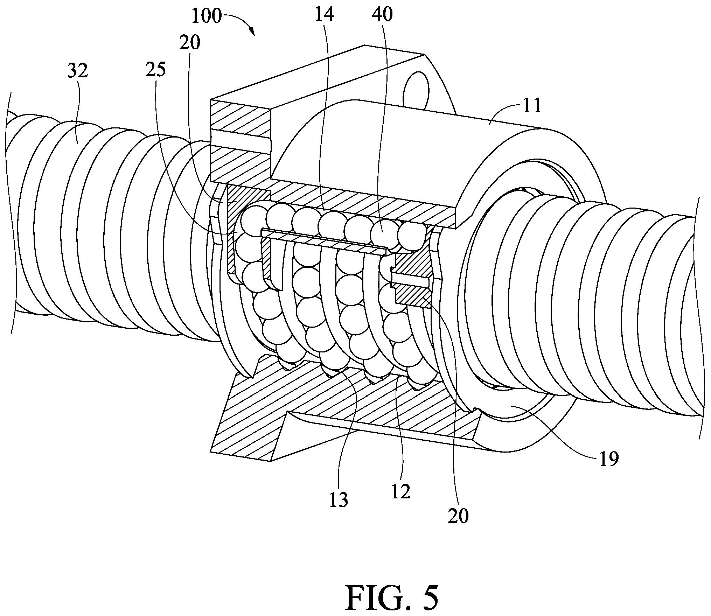

Please refer to Fig. 1 to Fig. 5. Fig. 1 illustrates a perspective view of a ball nut assembly according to an embodiment of the instant invention. Fig. 2 illustrates a perspective view of a ball nut assembly according to an embodiment of the instant invention from another perspective. Fig. 3 illustrates an exploded view of a ball nut assembly according to an embodiment of the instant invention. Fig. 4 illustrates a perspective view of an end component according to an embodiment of the instant invention. Fig. 5 illustrates a partial cross-sectional view of a ball nut assembly according to an embodiment of the instant invention. For the sake of clarity in describing the instant invention, as compared with the embodiment shown in Fig. 3, in Fig. 1, the dustproof sheet 19 on one side is omitted.

A ball nut assembly 100 is adapted to allow a plurality of balls rolling thereon. The ball nut assembly 100 includes a nut body (nut) 10 and two end components 20. In this embodiment, the ball nut assembly 100 further includes a shaft 30 inserted into the nut body 10. As shown in Fig. 3, the two end components 20 are assembled on two ends of nut body 10, respectively. In this embodiment, although two end components 20 are provided as an example for illustration, only one end component 20 may be provided in other embodiments. Further, since the two end components 20 have the same structure and are assembled symmetrically on the nut body 10, only the end component 20 on one side will be described below, and descriptions for the end component 20 on the other side will not be repeated.

The nut body 10 includes an outer ring wall 11, an inner ring wall 12, a ball groove 13, a reflow channel 14, two assembling grooves 15, a fixing hole 16, a first end portion 17, and a second end portion 18, where the first end portion 17 and the second end portion 18 axially correspond to each other. The ball groove 13 is annularly arranged on the inner ring wall 12. The reflow channel 14 is axially defined through the nut body 10 between the outer ring wall 11 and the inner ring wall 12. The two assembling grooves 15 are arranged on the first end portion 17 and the second end portion 18 of nut body 10, respectively. In this embodiment, since each of the first end portion 17 and the second end portion 18 of the nut body 10 is provided with an assembling groove 15, two end components 20 are provided to be assembled in the two assembling grooves 15, respectively. In other embodiments, only one assembling groove 15 may be arranged on the first end portion 17 or the second end portion 18 of the nut body 10, and one end component 20 may be assembled to the assembling groove 15. In addition, the first end portion 17 and the second end portion 18 may have different implementations, and different structures of the first end portion 17 and the second end portion 18 will be described in detail later.

As shown in Fig. 1 and Fig. 3, the assembling groove 15 has a first side surface 151, a second side surface 152, a bottom surface 153, and an assembling groove wall 154. The first side surface 151 and the second side surface 152 are opposite to each other. The bottom surface 153 is connected to the first side surface 151 and the second side surface 152. The fixing hole 16 is on the bottom surface 153. The assembling groove wall 154 is adjacent to the first side surface 151, the second side surface 152, and the bottom surface 153, and a surface of the assembling groove wall 154 is flushed with a surface of the outer ring wall 11. As shown in Fig. 1 and Fig. 3, the first side surface 151 is formed on portion of one side of the inner ring wall 12; likewise, the second side surface 152 is also formed on the portion of the side of the inner ring wall 12. The bottom surface 153 is formed on the side of the inner ring wall 12 along the radial direction. In this way, the assembling groove 15 can be prevented from being directly exposed to the nut body 10. In this embodiment, a thickness between the assembling groove wall 154 and the outer ring wall 11 is at least 2 mm.

Please refer to Fig. 1 to Fig. 4, the two end components 20 are applied in the ball nut assembly 100, and the two end components 20 are respectively assembled in the two assembling grooves 15 of the nut body 10. As shown in Fig. 3 and Fig. 4, each of the end components 20 includes a first contact surface 21, a second contact surface 22, a radial surface 23, a fixing portion 24, and a reflow bend 25. The second contact surface 22 is opposite to the first contact surface 21. The radial surface 23 extends radially and is connected to the first contact surface 21 and the second contact surface 22. The fixing portion 24 is arranged on the radial surface 23. The reflow bend 25 is arranged on the second contact surface 22.

When the end component 20 is assembled in the assembling groove 15 in the way shown in Fig. 1, please also refer to Fig. 1, Fig. 3, and Fig. 4. the fixing portion 24 is correspondingly fixed in the fixing hole 16. The first contact surface 21 contacts the first side surface 151 of the assembling groove 15 in a force-fit manner. The second contact surface 22 contacts the second side surface 152 of the assembling groove 15 in the force-fit manner. As shown in Fig. 5, two ends of the reflow bend 25 respectively correspond to the ball groove 13 and the reflow channel 14. In this embodiment, the fixing hole 16 is a screw hole, and the fixing portion 24 comprise for example a screw and a through hole, and the end component 20 is assembled in the assembling groove 15 in a screw locking manner.

Next, please refer to Fig. 1, Fig. 3, and Fig. 5, the shaft 30 is axially inserted into the nut body 10. As shown in Fig. 5, a plurality of balls 40 rolls in a ball circulation channel formed by the ball groove 13, an outer wall of the shaft 30, the reflow bend 25, and the reflow channel 14. In this embodiment, the shaft 30 further includes a plurality of track grooves 32, and the balls 40 roll in the channel formed by the ball grooves 13 and the track grooves 32. In other embodiments, the shaft 30 does not necessarily have the track groove 32. For example, the shaft 30 is a round rod with a smooth surface, and the balls 40 roll in the channel formed between the ball groove 13 and the smooth surface of the shaft 30.

Specifically, according to one or some embodiments, the assembling groove 15 has the assembling groove wall 154, and because the assembling groove wall 154 has a certain thickness, rather than being exposed outward (formed as an open groove). In this way, the integrity, strength, and service life of the nut body 10 can be further improved. At the same time, such configuration also prevents the internal components of the ball nut assembly 100 from being exposed, thus reducing the impact of noise on the internal components of the ball nut assembly 100.

In this embodiment, the first end portion 17 and the second end portion 18 may have different implementations. As shown in Fig. 2, the nut body 10 further includes a flange 181, the flange 181 radially extending from the second end 18 of the nut body 10. That is to say, in this embodiment, the surface of the flange 181 is flushed with the surface of the second end portion 18 of the nut body 10. In this way, an assembling plane having a maximized surface area can be maintained during the assembling process. In this embodiment, the flange 181 is formed from the second end portion 18, but the instant invention is not limited thereto; in some embodiments, the flange 18 may also be formed on the first end portion 17.

In this embodiment, the ball nut assembly 100 further includes two dustproof sheets 19. Each of the dustproof sheets 19 has a convex portion 191, the nut body 10 has hollow portions 10A, 10B, the dustproof sheets 190 are assembled in the hollow portions 10A, 10B, respectively, and the convex portion 191 correspondingly covers the assembling groove 15. Please refer to Fig. 2 and Fig. 3 again, the two dustproof sheets 19 are respectively assembled on the first end portion 17 and the second end portion 18 of the nut body 10. Through the hollow portions 10A, 10B arranged in the nut body 10, dust or dirt can be prevented from entering the ball nut assembly 100. Further, through that the convex portion 191 protruding from the periphery of the dustproof sheet 19 covers the assembling groove 15 correspondingly, dustproof effect for the assembling groove 15 can be achieved. In this embodiment, the two dustproof sheets 19 are assembled on the first end portion 17 and the second end portion 18, respectively, but the instant invention is not limited thereto; in some embodiments, and a dustproof sheet 19 may be assembled only on an end of the ball nut assembly 100 where the end component 20 is assembled.

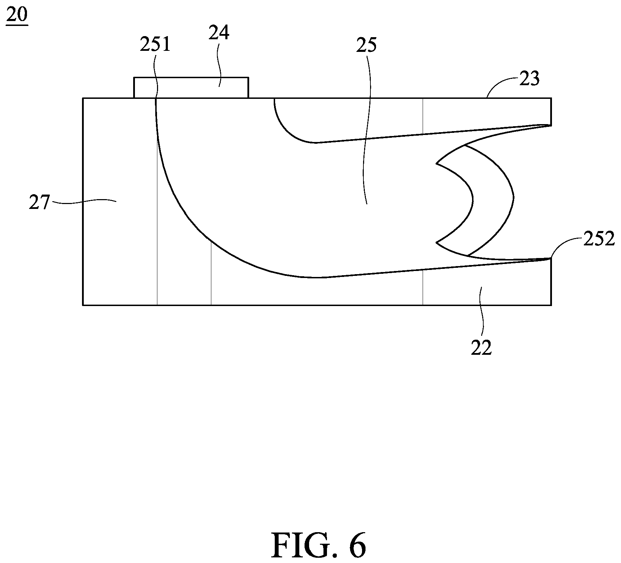

Please refer to Fig. 6. Fig. 6 illustrates a front view of an end component according to an embodiment of the instant invention. As shown in Fig. 6, in this embodiment, the reflow bend 25 has a first end 251 and a second end 252. The first end 251 is opposite to the second end 252. A distance between the first end 251 and the second end 252 is a rollable distance of the ball 40 in the return bend 25. By shortening the distance from the first end 251 to the second end 252, issues of the clogging of the balls 40 can be reduced so as to increase the rolling smoothness of the balls 40. In this embodiment, a rollable distance from the first end 251 to the second end 252 is 2 to 3 times a diameter of one of the balls 40.

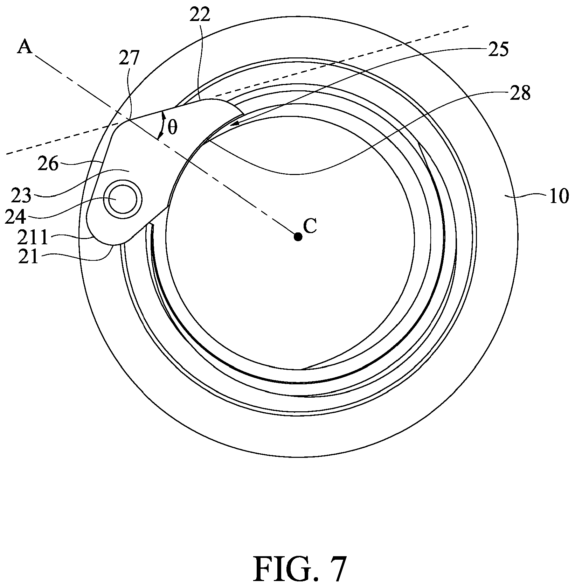

Please refer to Fig. 3, Fig. 4, Fig. 6, and Fig. 7. Fig. 7 illustrates a schematic view of a nut body, an end component, and a shaft according to an embodiment of the instant invention. For the sake of clarity, in Fig. 7 some components are omitted, and only the nut body 10, the end component 20, and the shaft 30 are shown. As shown in Fig. 3 and Fig. 4, the end component 20 further has an axial surface 26. The axial surface 26 axially extends and is connected to the first contact surface 21 and the second contact surface 22. The first contact surface 21 has a first fillet portion 211, and a second fillet portion 27 is between the second contact surface 22 and the axial surface 26. According to some embodiments, through the configuration of the first fillet portion 211, the impact force of the first contact surface 21 of the end component 20 against the first side surface 151 is relieved, and wear of the end component 20 and the nut body 10 is reduced. In this embodiment, a radius of the first fillet portion is 0.8 to 1.8 times a diameter of one of the balls 40. As shown in Fig. 6 and Fig. 7, the reflow bend 25 of the end component 20 is arranged on the second contact surface 22, and the reflow bend 25 has a guide angle for guiding the rolling of the balls 40 due to the inclination of the second contact surface 22. As shown in Fig.7, a line connecting the second fillet portion 27 and an axial center C of the nut body 10 forms a reference axis A, and an angle θ between a virtual extension line of the second contact surface 22 and the reference axis A is the guide angle, the angle θ is between 40 and 50 degrees. Here, the angle θ is, for example, 43 degrees. In addition, the end component 20 further has an arc surface 28. The arc surface 28 is opposite to the axial surface 26 and is connected to the first contact surface 21 and the second contact surface 22. Since the center of circle of the arc surface 28 corresponds to the axis center C of the nut body 10, a line connecting to the second fillet portion 27 and a center of circle of the arc surface 28 (that is, the axis center C) forms the reference axis A, and an angle θ between a virtual extension line of the second contact surface 22 and the reference axis A is also the guide angle.

## Claims

1. A ball nut assembly (100), comprising:
a nut body (10) comprising an outer ring wall (11), an inner ring wall (12), a ball groove (13), a reflow channel (14), an assembling groove (15), and a fixing hole (16), wherein the ball groove (13) is annularly arranged on the inner ring wall (12); the reflow channel (14) is axially defined through the nut body (10) between the outer ring wall (11) and the inner ring wall (12); the assembling groove (15) is arranged on an end portion, and the assembling groove (15) has a first side surface (151), a second side surface (152), a bottom surface (153), and an assembling groove wall (154); the first side surface (151) and the second side surface (152) are opposite to each other; the bottom surface (153) is connected to the first side surface (151) and the second side surface (152), and the fixing hole (16) is on the bottom surface (153); the assembling groove wall (154) is adjacent to the first side surface (151), the second side surface (152), and the bottom surface (153), and a surface of the assembling groove wall (154) is flushed with a surface of the outer ring wall (11);
an end component (20) comprising:
a first contact surface (21);
a second contact surface (22) opposite to the first contact surface (21);
a radial surface (23) radially extending and connected to the first contact surface (21) and the second contact surface (22);
a fixing portion (24) arranged on the radial surface (23);
a reflow bend (25) arranged on the second contact surface (22), the reflow bend (25) has a first end (251) and a second end (252);
an axial surface (26) extending axially and connected to the first contact surface (21) and the second contact surface (22), the first contact surface (21) has a first fillet portion (211), and a second fillet portion (27) is between the second contact surface (22) and the axial surface (26); and
an arc surface (28) opposite to the axial surface (26) and connected to the first contact surface (21) and the second contact surface (22);
wherein the end component (20) accommodated in the assembling groove (15); the first contact surface (21) contacts the first side surface (151) of the assembling groove (15) in a force-fit manner; the second contact surface (22) contacts the second side surface (152) of the assembling groove (15) in the force-fit manner, two ends of the reflow bend (25) respectively correspond to the ball groove (13) and the reflow channel (14), and the fixing portion (24) is fixed in the fixing hole (16);
a shaft (30) inserted into the nut body (10); and
a plurality of balls (40) rolling in a ball circulation channel formed by the ball groove (13), an outer wall of the shaft (30), the reflow bend (25), and the reflow channel (14);
**characterized in that** a rollable distance from the first end (251) to the second end (252) is 2 to 3 times a diameter of one of the balls (40),
wherein a radius of the first fillet portion (211) is 0.8 to 1.8 times a diameter of one of the balls (40); and
wherein a line connecting to the second fillet portion (27) and a center of circle of the arc surface (28) forms a reference axis (A), and an angle (θ) between a virtual extension line of the second contact surface (22) and the reference axis (A) is between 40 and 50 degrees.

2. The ball nut assembly (100) according to claim 1, wherein the nut body (10) further comprises a flange (181) radially extending from one end of the nut body (10).

3. The ball nut assembly (100) according to claims 1 or 2, further comprising a dustproof sheet (19), wherein the dustproof sheet (19) has a convex portion (191), the nut body (10) has a hollow portion (10A), the dustproof sheet (19) is assembled in the hollow portion (10A), and the convex portion (191) correspondingly covers the assembling groove (15).

4. The ball nut assembly (100) according to any one of claims 1 to 3, wherein a thickness between the assembling groove wall (154) and the outer ring wall (11) is at least 2 mm.

## Patentansprüche

1. Kugelmuttereinrichtung (100), welche aufweist:
einen Mutterkörper (10), welcher eine äußere Ringwand (11), eine innere Ringwand (12), eine Kugelnut (13), einen Rückführkanal (14), eine Montagenut (15) und ein Befestigungsloch (16) aufweist, wobei die Kugelnut (13) ringförmig an der inneren Ringwand (12) angeordnet ist; der Rückführkanal (14) axial durch den Mutterkörper (10) zwischen der äußeren Ringwand (11) und der inneren Ringwand (12) definiert ist; wobei die Montagenut (15) an einem Endabschnitt angeordnet ist und die Montagenut (15) eine erste Seitenfläche (151), eine zweite Seitenfläche (152), eine Bodenfläche (153) und eine Montage-Nut-Wand (154) hat; wobei die erste Seitenfläche (151) und die zweite Seitenfläche (152) einander gegenüberliegen; wobei die Bodenfläche (153) mit der ersten Seitenfläche (151) und der zweiten Seitenfläche (152) verbunden ist und das Befestigungsloch (16) an der Bodenfläche (153) ist; wobei die Montage-Nut-Wand (154) an die erste Seitenfläche (151), die zweite Seitenfläche (152) und die Bodenfläche (153) angrenzt und eine Fläche der Montage-Nut-Wand (154) mit einer Fläche der äußeren Ringwand (11) bündig ist;
eine Endkomponente (20), welche aufweist:
eine erste Kontaktfläche (21);
eine zweite Kontaktfläche (22) entgegengesetzt zu der ersten Kontaktfläche (21);
eine radiale Fläche (23), welche sich radial erstreckt und mit der ersten Kontaktfläche (21) und der zweiten Kontaktfläche (22) verbunden ist;
einen Befestigungsabschnitt (24), welcher an der radialen Fläche (23) angeordnet ist;
einen Rückführbogen (25), welcher an der zweiten Kontaktfläche (22) angeordnet ist, wobei der Rückführbogen (25) ein erstes Ende (251) und ein zweites Ende (252) hat;
eine axiale Fläche (26), welche sich axial erstreckt und mit der ersten Kontaktfläche (21) und der zweiten Kontaktfläche (22) verbunden ist, wobei die erste Kontaktfläche (21) einen ersten Ausrundungsabschnitt (211) hat und ein zweiter Ausrundungsabschnitt (27) zwischen der zweiten Kontaktfläche (22) und der axialen Fläche (26) ist; und
eine Bogenfläche (28), die entgegengesetzt zu der axialen Fläche (26) ist und mit der ersten Kontaktfläche (21) und der zweiten Kontaktfläche (22) verbunden ist;
wobei die Endkomponente (20) in der Montagenut (15) aufgenommen ist; wobei die erste Kontaktfläche (21) die erste Seitenfläche (151) der Montagenut (15) in einer kraftschlüssigen Weise kontaktiert; wobei die zweite Kontaktfläche (22) die zweite Seitenfläche (152) der Montagenut (15) in der kraftschlüssigen Weise kontaktiert, zwei Enden des Rückführbogens (25) entsprechend zugeordnet zu der Kugelnut (13) und dem Rückführkanal (14) korrespondieren und der Befestigungsabschnitt (24) in dem Befestigungsloch (16) befestigt ist;
einen Schaft (30), welcher in den Mutterkörper (10) eingesetzt ist; und
mehrere Kugeln (40), welche in einem Kugel-Umlauf-Kanal rollen, welcher durch die Kugelnut (13), eine äußere Wand des Schafts (30), den Rückführbogen (25) und den Rückführkanal (14) gebildet ist;
**dadurch gekennzeichnet, dass** ein rollbarer Abstand von dem ersten Ende (251) zu dem zweiten Ende (252) 2- bis 3-mal ein Durchmesser von einer der Kugeln (40) ist,
wobei ein Radius des ersten Ausrundungsabschnitts (211) 0,8- bis 1,8-mal ein Durchmesser von einer der Kugeln (40) ist; und
wobei eine Linie, welche den zweiten Ausrundungsabschnitt (27) und ein Kreiszentrum der Bogenfläche (28) verbindet, eine Referenzachse (A) bildet, und ein Winkel (θ) zwischen einer virtuellen Verlängerungslinie der zweiten Kontaktfläche (22) und der Referenzachse (A) zwischen 40 und 50 Grad ist.

2. Kugelmuttereinrichtung (100) nach Anspruch 1, wobei der Mutterkörper (10) ferner einen Flansch (181) aufweist, welcher sich radial von einem Ende des Mutterkörpers (10) erstreckt.

3. Kugelmuttereinrichtung (100) nach Anspruch 1 oder 2, welche ferner eine staubdichte Platte (19) aufweist, wobei die staubdichte Platte (19) einen konvexen Abschnitt (191) hat, der Mutterkörper (10) einen hohlen Abschnitt (10A) hat, die staubdichte Platte (19) in dem hohlen Abschnitt (10A) montiert ist, und der konvexe Abschnitt (191) entsprechend die Montagenut (15) bedeckt.

4. Kugelmuttereinrichtung (100) nach irgendeinem der Ansprüche 1 bis 3, wobei eine Dicke zwischen der Montage-Nut-Wand (154) und der äußeren Ringwand (11) mindestens 2 mm ist.

## Revendications

1. Ensemble d'écrou à billes (100), comprenant :
un corps d'écrou (10) comprenant une paroi annulaire extérieure (11), une paroi annulaire intérieure (12), une gorge à billes (13), un canal de recirculation (14), une gorge d'assemblage (15) et un trou de fixation (16), dans lequel la gorge à billes (13) est disposée annulairement sur la paroi annulaire intérieure (12) ; le canal de recirculation (14) est défini axialement à travers le corps d'écrou (10) entre la paroi annulaire extérieure (11) et la paroi annulaire intérieure (12) ; la gorge d'assemblage (15) est disposée sur une partie d'extrémité, et la gorge d'assemblage (15) comprend une première surface latérale (151), une deuxième surface latérale (152), une surface de fond (153) et une paroi de gorge d'assemblage (154) ; la première surface latérale (151) et la deuxième surface latérale (152) sont opposées l'une à l'autre ; la surface de fond (153) est reliée à la première surface latérale (151) et à la deuxième surface latérale (152), et le trou de fixation (16) se trouve sur la surface de fond (153) ; la paroi de gorge d'assemblage (154) est adjacente à la première surface latérale (151), à la deuxième surface latérale (152) et à la surface de fond (153), et une surface de la paroi de gorge d'assemblage (154) affleure une surface de la paroi annulaire extérieure (11) ;
un élément d'extrémité (20) comprenant :
une première surface de contact (21) ;
une deuxième surface de contact (22) opposée à la première surface de contact (21) ;
une surface radiale (23) s'étendant radialement et reliée à la première surface de contact (21) et à la deuxième surface de contact (22) ;
une partie de fixation (24) disposée sur la surface radiale (23) ;
un coude de recirculation (25) disposé sur la deuxième surface de contact (22), le coude de recirculation (25) comprenant une première extrémité (251) et une deuxième extrémité (252) ;
une surface axiale (26) s'étendant axialement et reliée à la première surface de contact (21) et à la deuxième surface de contact (22), la première surface de contact (21) comprenant une première partie de raccordement arrondie (211), et une deuxième partie de raccordement arrondie (27) se trouvant entre la deuxième surface de contact (22) et la surface axiale (26) ; et
une surface en arc (28) opposée à la surface axiale (26) et reliée à la première surface de contact (21) et à la deuxième surface de contact (22) ;
dans lequel l'élément d'extrémité (20) est logé dans la gorge d'assemblage (15) ; la première surface de contact (21) est en contact avec la première surface latérale (151) de la gorge d'assemblage (15) par ajustement serré ; la deuxième surface de contact (22) est en contact avec la deuxième surface latérale (152) de la gorge d'assemblage (15) par ajustement serré, deux extrémités du coude de recirculation (25) correspondant respectivement à la gorge à billes (13) et au canal de recirculation (14), et la partie de fixation (24) étant fixée dans le trou de fixation (16) ;
un arbre (30) inséré dans le corps d'écrou (10) ; et
une pluralité de billes (40) roulant dans un canal de circulation de billes formé par la gorge à billes (13), une paroi extérieure de l'arbre (30), le coude de recirculation (25) et le canal de recirculation (14) ;
**caractérisé en ce qu'**une distance de roulement entre la première extrémité (251) et la deuxième extrémité (252) est égale à 2 à 3 fois un diamètre de l'une des billes (40),
dans lequel un rayon de la première partie de raccordement arrondie (211) est égal à 0,8 à 1,8 fois un diamètre de l'une des billes (40) ; et
dans lequel une ligne reliant la deuxième partie de raccordement arrondie (27) et un centre de cercle de la surface en arc (28) forme un axe de référence (A), et un angle (θ) entre une ligne de prolongement virtuelle de la deuxième surface de contact (22) et l'axe de référence (A) est compris entre 40 et 50 degrés.

2. Ensemble d'écrou à billes (100) selon la revendication 1, dans lequel le corps d'écrou (10) comprend en outre une bride (181) s'étendant radialement depuis une extrémité du corps d'écrou (10).

3. Ensemble d'écrou à billes (100) selon la revendication 1 ou 2, comprenant en outre une feuille anti-poussière (19), dans lequel la feuille anti-poussière (19) comprend une partie convexe (191), le corps d'écrou (10) comprend une partie creuse (10A), la feuille anti-poussière (19) est assemblée dans la partie creuse (10A), et la partie convexe (191) recouvre de manière correspondante la gorge d'assemblage (15).

4. Ensemble d'écrou à billes (100) selon l'une quelconque des revendications 1 à 3, dans lequel une épaisseur entre la paroi de gorge d'assemblage (154) et la paroi annulaire extérieure (11) est d'au moins 2 mm.
